# EUROPEAN PATENT SPECIFICATION

(11) **EP 2 693 066 B1**
(45) Date of publication and mention of the grant of the patent: **14.10.2015**
(21) Application number: 13178892.9
(22) Date of filing: 01.08.2013
(51) Int. Cl.: F16C 11/06

(54) **Ball joint**
Kugelgelenk
Joint sphérique

(30) Priority: 02.08.2012 JP 2012172110
(43) Date of publication of application: 05.02.2014
(73) Proprietor: Kayaba System Machinery Co., Ltd., Tokyo 105-0012 (JP)
(72) Inventor: Isoda, Kazuhiko, Chuo-ku, Tokyo 104-8370 (JP); Okamoto, Masanari, Minato-ku, Tokyo 105-0012 (JP); Hibako, Yoshifumi, Minato-ku, Tokyo 105-0012 (JP)
(74) Representative: Grünecker Patent- und Rechtsanwälte PartG mbB

(56) References cited:
- EP-A1- 1 623 855
- FR-A- 353 652
- FR-A1- 2 570 774
- GB-A- 2 207 970
- JP-A- 2005 121 141

## Description

### TECHNICAL FIELD

The present invention relates to a ball joint.

### BACKGROUND ART

A ball joint is a type of universal joints. The ball joint is a joint component that pivotably (relatively rotatably) pin-joints various members to each other in an arbitrary direction. The ball joint is used in various fields such as a vehicle suspension mechanism.

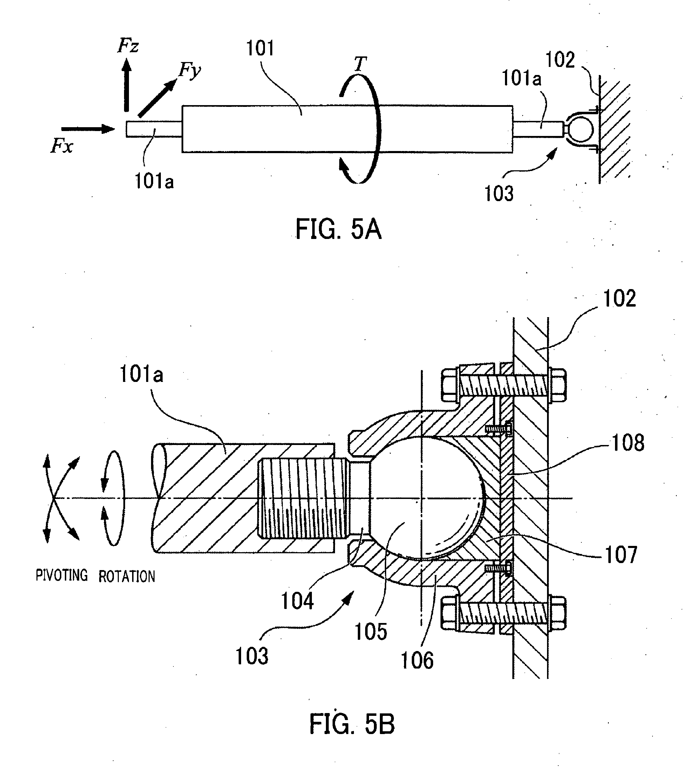

JP2005-121141A discloses a technique of using a ball joint instead of a clevis to install a vibration control damper in a structure such as a building. FIGS. 5A and 5B are diagrams illustrating a state that an oil damper as a vibration control damper 101 is installed in a structural frame 102 (such as a brace, a pillar, and a beam) of the structure serving as a vibration control target using a ball joint 103.

As illustrated in FIG. 5B, the ball joint 103 includes a spherical head portion 105 provided in a leading end of a ball stud 104, a ball retainer 106 that houses the spherical head portion 105, a holder 107 that rotatably supports the spherical head portion 105 in the ball retainer 106, and a plate 108 installed in a rear side of the ball retainer 106. By connecting the ball stud 104 to a rod 101a provided in one end side of the vibration control damper 101 and fixing the ball retainer 106 to the structural frame 102, the vibration control damper 101 is connected to the structural frame 102 through the ball joint 103.

As illustrated in FIG. 5A, an axial force Fx applied to the vibration control damper 101 along a shaft axis direction (X-direction) is transmitted to the structural frame 102 through the ball joint 103, that is, through the spherical head portion 105 of the ball stud 104, the holder 107, and the plate 108. As a result, the vibration control damper 101 is reliably restrained in the shaft direction and is operated without hindrance.

As forces Fy and Fz in two directions (Y-direction and Z-direction) perpendicular to the shaft direction are applied to the vibration control damper 101, the spherical head portion 105 is rotated in an arbitrary direction inside the ball retainer 106, so that the ball stud 104 is pivoted in an arbitrary direction against the ball retainer 106. Therefore, the pivoting of the vibration control damper 101 against the ball joint 103 is allowed without any restraint, so that the pivoting torque is not nearly transmitted to the structural frame 102. Therefore, it is possible to suppress a bending moment from being generated in the vibration control damper 101 or a joint portion.

As a rotational torque T is applied around the shaft of the vibration control damper 101, rotation of the spherical head portion 105 inside the ball retainer 106 is not restrained. Therefore, the ball stud 104 is rotated along with the vibration control damper 101. Accordingly, it is possible to prevent a high rotational torque T from being transmitted to the structural frame 102.

Therefore, if the vibration control damper 101 is connected to the structural frame 102 using the ball joint 103 described above, it is possible to suppress a useless force or torque other than the axial force from being applied to the vibration control damper 101. In addition, compared to a case where the vibration control damper 101 is jointed using a typical clevis, it is possible to more reliably and efficiently transmit an axial force in the joint portion. As a result, it is possible to miniaturize and simplify the joint portion and reduce backlash (minimum gap necessary to assemble components) of the joint portion. Therefore, it is possible to reliably and efficiently operate the vibration control damper from an infinitesimal deformation stage.

### SUMMARY OF INVENTION

However, in a case where the vibration control damper is not a type operated by the axial force like an oil damper, but, for example, a type in which a rotational torque is generated around the damper shaft like an inertial mass damper, that is, a type operated by transmitting a torque between the structural frames as a vibration control target, there is a possibility that the entire damper is rotated (slipped) against the structural frame 102, and the vibration control damper is not effectively operated if the structural frames 102 are jointed using the ball joint 103.

This invention aims to provide a ball joint capable of effectively operating a vibration control damper operated using a rotational torque.

According to an aspect of the present invention, a ball joint comprises a spherical head portion provided in a leading end of a ball stud; a ball retainer that houses the spherical head portion in a relatively rotatable state; a holder that supports the spherical head portion inside the ball retainer and restrains relative displacement in a shaft axis direction of the ball stud; and a rotation limiting mechanism provided in a virtual circle location as an intersection between a plane perpendicular to a shaft axis direction of the ball stud and passing through a center of the spherical head portion and a circumferential surface of the spherical head portion to limit relative rotation of the spherical head portion against the ball retainer, wherein the rotation limiting mechanism has an engagement hole formed in the circumferential surface of the spherical head portion and a limiting bolt that has a circular cross-sectional engagement protrusion inserted into the engagement hole in a leading end and is fastened to the ball retainer from an outer side of the ball retainer, the engagement hole has a center formed on a circumference of the virtual circle and is formed as an oval hole having a major axis extending in the shaft axis direction of the ball stud and a minor axis extending in a circumferential direction of the virtual circle in the engagement hole, and the minor axis is equal to a diameter of the engagement protrusion.

### BRIEF DESCRIPTION OF DRAWINGS

FIG. 1A is a cross-sectional view illustrating a ball joint according to an embodiment of the present invention.
FIG. 1B is a side view illustrating the ball joint as seen from a line IB-IB of FIG. 1A.
FIG. 1C is a cross-sectional view taken along a line IC-IC of FIG. 1A.
FIG. 1D is a plan view illustrating the ball joint as seen from a line ID-ID of FIG. 1A.
FIG. 2A is an enlarged view illustrating a portion IIA of FIG. 1C.
FIG. 2B is a cross-sectional view taken along a line IIB-IIB of FIG. 2A.
FIG. 2C is a cross-sectional view taken along a line IIC-IIC of FIG. 2A.
FIG. 3A is an explanatory diagram illustrating rotation around an X-axis of a spherical head portion.
FIG. 3B is an explanatory diagram illustrating rotation around a Y-axis of the spherical head portion.
FIG. 3C is an explanatory diagram illustrating rotation around a Z-axis of the spherical head portion.
FIG. 4 is a diagram illustrating a modification of the ball joint according to the embodiment of the present invention.
FIG. 5A is a schematic diagram illustrating a state that the vibration control damper is jointed to a structural frame using a ball joint of the related art.
FIG. 5B is a cross-sectional view illustrating the ball joint of the related art.

### DESCRIPTION OF EMBODIMENTS

An embodiment of this invention will be described in detail below with reference to the figures.

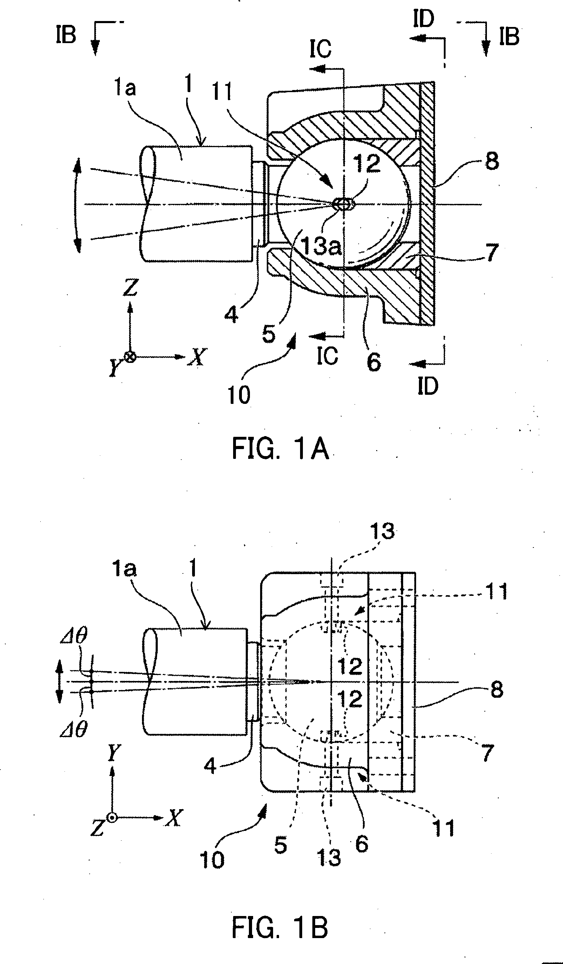

FIGS. 1A to 1D are diagrams illustrating a ball joint 10 according to the present embodiment.

The ball joint 10 according to the present embodiment is used to install a vibration control damper 1 in a structure. The ball joint 10 includes a ball stud 4 where a rod 1a of the vibration control damper 1 is connected, a spherical head portion 5 installed in a leading end of the ball stud 4, a ball retainer 6 that houses the spherical head portion 5 in a relatively rotatable state, a holder 7 that supports the spherical head portion 5 inside the ball retainer 6 to restrain relative displacement in a shaft axis direction of the ball stud 4, and a plate 8 installed in a rear side of the ball retainer 6. As a result, the ball joint 10 allows pivoting of the ball stud 4 against the ball retainer 6 in an arbitrary direction and restrains relative displacement in the shaft axis direction.

The ball joint 10 further includes a rotation limiting mechanism 11 that restrains relative rotation of the spherical head portion 5 against the ball retainer 6 around the shaft axis. As a result, it is possible to transmit a torque from the rod 1a of the vibration control damper 1 to the structure using the ball joint 10. In particular, it is possible to install the vibration control damper 1 such that a torque is transmitted between the structural frames as in a rotary inertia mass damper.

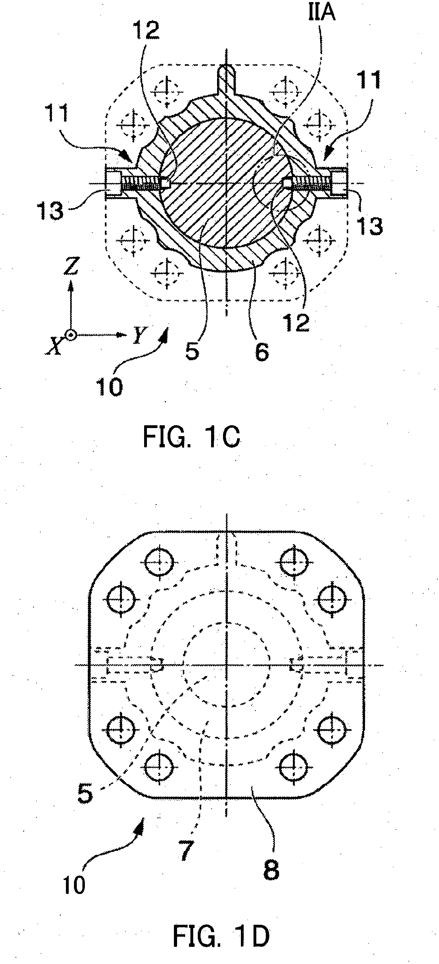

In the following description, as illustrated in FIGS. 1A to 1D, the shaft axis direction of the ball stud 4 is referred to as an X-direction, and rotation around the X-direction is referred to as rotation around the X-axis. In addition, a direction passing through a center of the spherical head portion 5 and perpendicular to the X-direction so as to bind a pair of rotation limiting mechanisms 11 is referred to as a Y-direction, and rotation around the Y-direction is referred to as rotation around the Y-axis. Furthermore, a direction perpendicular to the X-direction and the Y-direction is referred to as a Z-direction, and rotation around the Z-direction is referred to as a rotation around the Z-axis. In FIG. 1, the coordinates of the ball joint 10 are defined, for convenience purposes, such that the X-direction and the Y-direction are perpendicular to each other on a horizontal plane, and the Z-direction becomes a vertical direction.

The rotation limiting mechanism 11 is provided in a virtual circle location as an intersection between a plane perpendicular to the shaft axis direction (X-direction) of the ball stud 4 and passing through the center of the spherical head portion 5 and a circumferential surface around the spherical head portion 5 (that is, a location where the cross section of the spherical head portion 5 perpendicular to the shaft becomes maximum). The rotation limiting mechanism 11 restrains relative rotation (rotation around the X-axis) of the spherical head portion 5 against the ball retainer 6.

The rotation limiting mechanism 11 includes an engagement hole 12 formed on the circumferential surface of the spherical head portion 5 and a limiting bolt 13 having an engagement protrusion 13a formed in a leading end to have a circular cross section that can be inserted to the engagement hole 12. The limiting bolt 13 is fastened to the ball retainer 6 from the outside of the ball retainer 6. As a result, the engagement protrusion 13a is inserted into the engagement hole 12 to limit rotation of the spherical head portion 5.

The engagement hole 12 is formed such that a center position thereof matches a circumference of the virtual circle described above. The engagement hole 12 is formed as an oval hole having a major axis extending in the shaft axis direction (X-direction) of the ball stud 4 and a minor axis extending in the Z-direction perpendicular to the shaft axis direction. The minor axis is set to be equal to a diameter of the engagement protrusion 13a of the leading end of the limiting bolt 13. As a result, the engagement protrusion 13a of the leading end of the limiting bolt 13 is inserted into the engagement hole 12 without backlash in the Z-direction in a nearly fit state. Meanwhile, the engagement protrusion 13a can be relatively displaced within a range of the major axis of the engagement hole 12 in the X-direction.

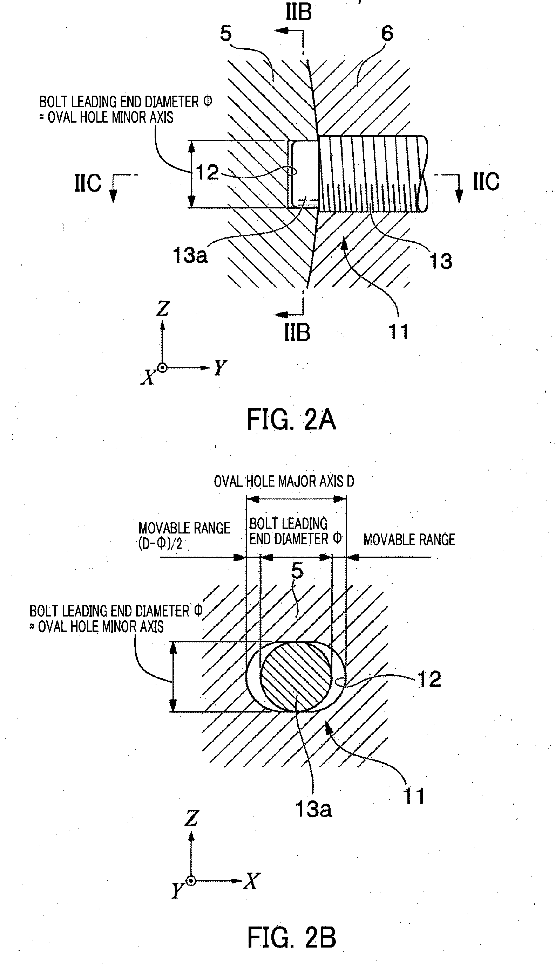

An engagement state between the engagement hole 12 and the engagement protrusion 13a will be described with reference to FIGS. 2A to 2C.

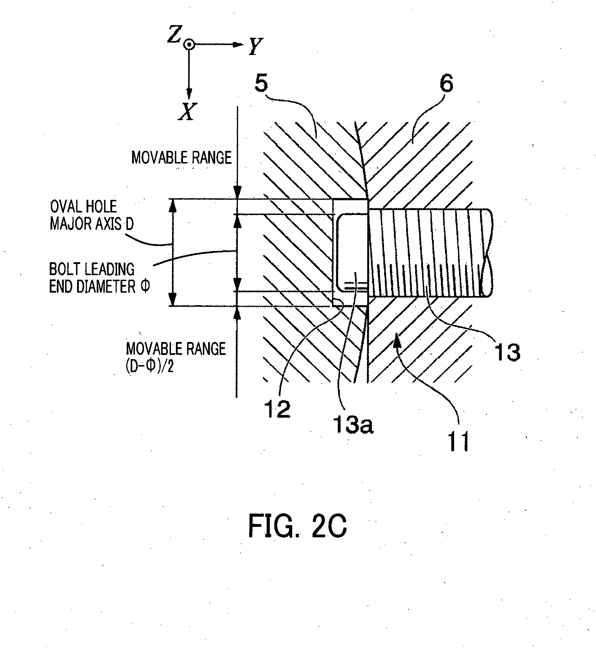

If the major axis (oval hole major axis) of the engagement hole 12 is denoted by "D," and a diameter (diameter at the leading end of the bolt) of the engagement protrusion 13a of the leading end of the limiting bolt 13 is denoted by "φ," the minor axis (oval hole minor axis) of the engagement hole 12 becomes nearly "φ." In this case, a gap corresponding to a difference between the major axis D and the diameter φ of the engagement protrusion 13a is obtained between the engagement hole 12 and the engagement protrusion 13a. As illustrated in FIGS. 2B and 2C, a gap corresponding to (D-φ)/2 is obtained as a movable range in both sides of the engagement protrusion 13a. Relative displacement between the engagement hole 12 and the engagement protrusion 13a in the X-direction is allowed within a range of this gap.

In the location where the engagement hole 12 is formed, the shaft axis direction of the ball stud 4 is nearly in parallel with the spherical surface of the spherical head portion 5. Therefore, in this location, the axial force is not nearly transmitted from the spherical head portion 5 to the ball retainer 6 (a compressive stress on a contact surface is nearly zero). Therefore, even when the engagement hole 12 is formed in this location, a cross-sectional loss is negligible.

Since the engagement protrusion 13a is inserted into the engagement hole 12 by providing the rotation limiting mechanism 11, relative displacement of the engagement hole 12 against the engagement protrusion 13a in the Z-direction is restrained. Therefore, relative rotation of the spherical head portion 5 against the ball retainer 6 in a circumferential direction of the virtual circle, that is, rotation of the ball stud 4 against the ball retainer 6 around the X-axis is reliably restrained by engagement between the engagement hole 12 and the engagement protrusion 13a. In addition, since the engagement hole 12 can be displaced against the engagement protrusion 13a within a range of the major axis D, pivoting of the ball stud 4 against the ball retainer 6 in each direction is allowed without any restraint.

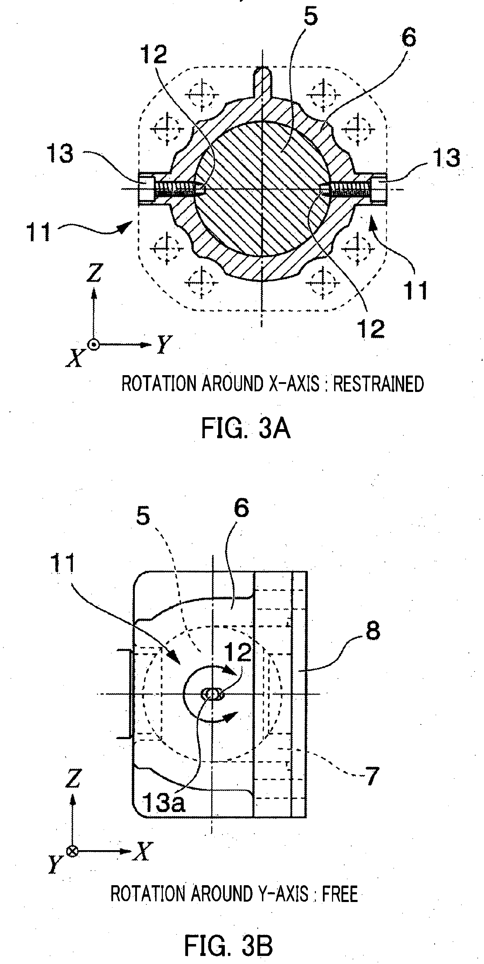

That is, as illustrated in FIG. 3A, rotation of the spherical head portion 5 against the ball retainer 6 around the X-axis is reliably restrained by the rotation limiting mechanism 11 (more specifically, by a bearing pressure strength caused by the engagement protrusion 13a in the leading end of the limiting bolt 13).

As illustrated in FIG. 3B, rotation around the Y-axis is freely allowed without any restraint by using the limiting bolt 13 as a rotational center.

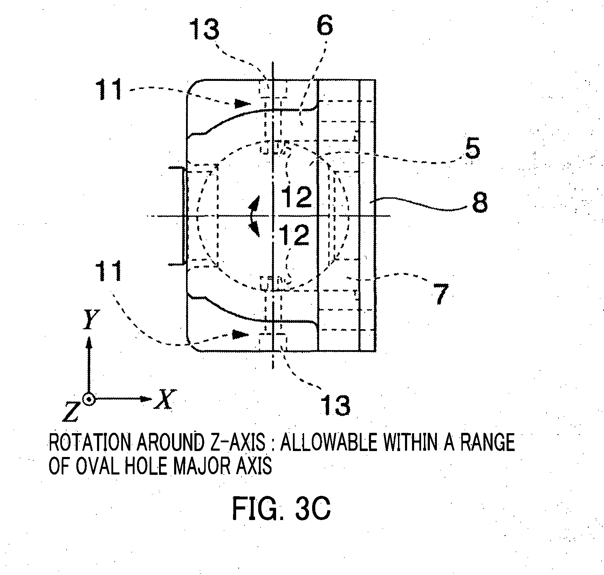

As illustrated in FIG. 3C, rotation around the Z-axis is limited within a range of the major axis D where the engagement hole 12 formed as an oval hole can be displaced against the engagement protrusion 13a, and rotation around the Z-axis is allowed without any restraint within that range. Therefore, as illustrated in FIG. 1B, rotation around the Z-axis of the ball stud 4 against the ball retainer 6, that is, pivoting of the vibration control damper 1 against the ball joint 10 in the Y-direction is allowed within that movable range without any restraint.

In a case where both the rotation around the Y-axis of FIG. 3B and the rotation around the Z-axis of FIG. 3C are generated simultaneously, the engagement hole 12 is displaced within a range of the major axis D while the engagement hole 12 is inclined in an arbitrary direction against the engagement protrusion 13a to follow the rotation. Therefore, pivoting of the ball stud 4 in an arbitrary direction is allowed without hindrance.

As a dimension of the rotation limiting mechanism 11, for example, if the spherical head portion 5 has a diameter of 190 mmφ, and a movable range as a difference between the major axis D of the engagement hole 12 and the diameter φ of the engagement protrusion 13a is set to 4 mm (2 mm for one side), a pivoting range Δθ (FIG. 1B) allowed in the Y-direction becomes Δθ = 2/(190/2) = 0.021 rad. Therefore, it is possible to obtain a deformation angle of about 1/50 necessary to install various vibration control dampers in the structure without hindrance. Accordingly, it is possible to obtain sufficient critical differential movement.

If the vibration control damper 1 is jointed to the structure frame of the vibration control target structure using the ball joint 10 described above, it is possible to allow pivoting in each direction without hindrance and reliably restrain rotation around the shaft axis of the vibration control damper 1 using the rotation limiting mechanism 11.

Even when a torque transmission type vibration control damper 1 such as a rotary inertia mass damper is installed, it is possible to operate the vibration control damper 1 without hindrance and reasonably install the vibration control damper 1 compared to a case where a clevis is used.

In the ball joint 10 according to the present embodiment, a pair of rotation limiting mechanisms 11 are arranged to face each other by interposing the center of the spherical head portion 5. However, a single rotation limiting mechanism 11 or three or more rotation limiting mechanisms 11 may also be provided if pivoting in each direction can be allowed while rotation around the X-axis of the spherical head portion 5 against the ball retainer 6 is restrained by the rotation limiting mechanism 11.

However, if a pair of rotation limiting mechanisms 11 are arranged to face each other by interposing the center of the spherical head portion 5, and rotation is restrained using a pair of the rotation limiting mechanisms 11, both the rotation limiting mechanisms 11 serve as a rotation center for the rotation around the Y-axis. Therefore, balance is improved as a whole.

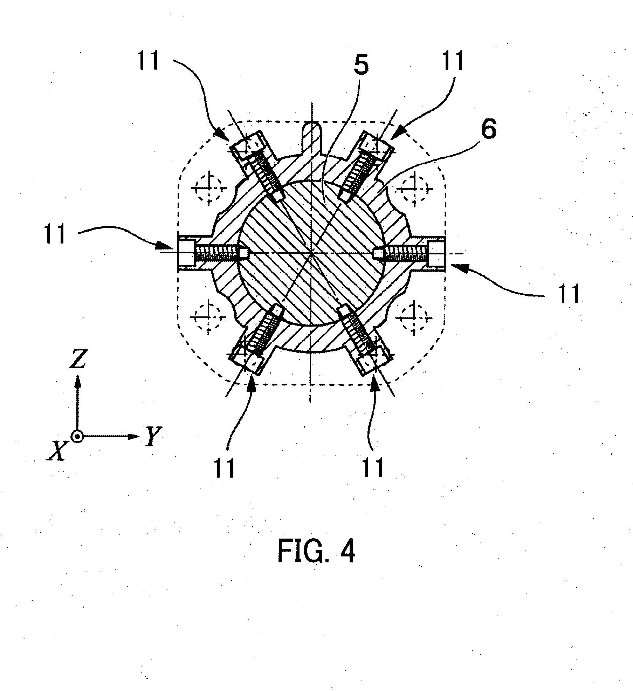

A torque resistant force generated by the rotation limiting mechanism 11 is proportional to the number of limiting bolts 13. Therefore, it is conceivable that, in a case where a transmission torque is particularly high, for example, a plurality of or a plurality of pairs of rotation limiting mechanisms 11 may be provided as illustrated in FIG. 4.

FIG. 4 is a cross-sectional view illustrating a state that three pairs of rotation limiting mechanisms 11 are arranged with a nearly equal interval. In this case, rotation is restrained using all of six limiting bolts 13. Therefore, a bearing pressure strength necessary in each limiting bolt 13 is reduced to 1/6 that of a case where only a single limiting bolt 13 is employed.

If the vibration control damper 1 is jointed to the structural frame using the ball joint 10 according to the present embodiment, the following effects can be obtained.

Since the ball joint 10 restrains rotation around the damper shaft direction, it is possible to transmit a torque. In addition, since the ball joint 10 does not restrain rotation (pivoting) in a direction perpendicular to the damper shaft, it is possible to suppress a bending moment from being generated in the joint portion.

Since the ball joint 10 just has the limiting bolt serving as a pin for preventing rotation around the shaft and the engagement hole for inserting the limiting bolt, it is possible to lower a manufacturing cost.

Since the engagement protrusion in the leading end of the limiting bolt is inserted into the engagement hole, and a torque is handled using the bearing pressure strength of the engagement protrusion, it is possible to obtain a mechanically clear resistance mechanism.

Meanwhile, as a structure of the ball joint 10, it may be conceivable that a torque is transmitted using a frictional resistance between the spherical head portion and the ball retainer or a frictional resistance generated by pressing the leading end of the limiting bolt according to the aforementioned embodiment toward the surface of the spherical head portion. However, in this case, rotation (pivoting) perpendicular to the shaft is hindered by the frictional resistance.

On the contrary, in the ball joint 10 according to the present embodiment, the engagement protrusion is inserted into the engagement hole such that the frictional resistance is not generated, and a torque is transmitted using the bearing pressure strength of the limiting bolt. Therefore, it is possible to restrain only rotation around the damper shaft and allow pivoting in other directions.

In addition, using the ball joint 10, it is possible to reduce a necessary length of the joint portion and reduce backlash in the joint portion, compared to a case where rotation around the shaft is restrained using a clevis. Therefore, it is possible to improve workability.

For example, in a case where a vibration control damper 1 of 1200 kN is jointed using a clevis, a necessary total length including the clevis reaches 1685 mm. However, in a case where the vibration control damper 1 of the same specification is jointed using the ball joint 10 according to the present embodiment, a necessary total length including the ball joint 10 reaches 1360 mm. Therefore, it is possible to achieve miniaturization of about 20%.

In a case where a torque (rotational force around the damper shaft) applied to the joint portion is high, it is possible to obtain a torque resistant force proportional to the number of bolts by providing a plurality of rotation limiting mechanisms 11 to increase the number of limiting bolts 13 for preventing rotation. In a case where a plurality of rotation limiting mechanisms 11 are provided, all of the rotation limiting mechanisms 11 are arranged on a circumference in a location where a cross section perpendicular to the shaft in the spherical head portion 5 becomes maximum (a location where the cross section perpendicular to the shaft passes through the center of the spherical head portion).

The embodiments of the present invention described above are merely illustration of some application examples of the present invention and not of the nature to limit the technical scope of the present invention to the specific constructions of the above embodiments.

## Claims

1. A ball joint (10) comprising:
a spherical head portion (5) provided in a leading end of a ball stud (4);
a ball retainer (6) that houses the spherical head portion (5) in a relatively rotatable state;
a holder (7) that supports the spherical head portion (5) inside the ball retainer (6) and restrains relative displacement in a shaft axis direction of the ball stud(6) **characterized in that**
a rotation limiting mechanism (11) provided in a virtual circle location as an intersection between a plane perpendicular to a shaft axis direction of the ball stud (6) and passing through a center of the spherical head portion (5) and a circumferential surface of the spherical head portion (5) to limit relative rotation of the spherical head portion (5) against the ball retainer (6),
wherein the rotation limiting mechanism (11) has an engagement hole (12) formed in the circumferential surface of the spherical head portion (5) and a limiting bolt (13) that has a circular cross-sectional engagement protrusion (13a) inserted into the engagement hole (12) in a leading end and is fastened to the ball retainer (6) from an outer side of the ball retainer (6),
the engagement hole (12) has a center formed on a circumference of the virtual circle and is formed as an oval hole having a major axis extending in the shaft axis direction of the ball stud (6) and a minor axis extending in a circumferential direction of the virtual circle in the engagement hole (12), and
the minor axis is equal to a diameter of the engagement protrusion (13a).

2. The ball joint (10) according to claim 1, wherein a plurality of the rotation limiting mechanisms (11) are provided with an interval along a circumferential direction of the virtual circle.

3. The ball joint (10) according to claim 2, wherein a pair of the rotation limiting mechanisms (11) are arranged to face each other by interposing a center of the spherical head portion (5).

4. The ball joint (10) according to claim 2, wherein a plurality of pairs of the rotation limiting mechanisms (11) are arranged to face each other by interposing a center of the spherical head portion (5).

## Patentansprüche

1. Kugelgelenk (10), das umfasst:
einen kugelförmigen Kopfabschnitt (5), der an einem vorderen Ende eines Kugelbolzens (4) vorhanden ist;
einen Kugelkäfig (6), der den kugelförmigen Kopfabschnitt (5) in einem Zustand aufnimmt, in dem er relativ gedreht werden kann;
einen Halter (7), der den kugelförmigen Kopfabschnitt (5) im Inneren des Kugelkäfigs (6) hält und relative Verschiebung in einer Wellenachsenrichtung des Kugelbolzens (6) einschränkt, **dadurch gekennzeichnet, dass**
ein Drehungs-Begrenzungsmechanismus (11), der an einem virtuellen Kreisort als einem Schnittpunkt zwischen einer Ebene, die senkrecht zu einer Wellenachsenrichtung des Kugelbolzens (6) ist und durch eine Mitte des kugelförmigen Kopfabschnitts (5) hindurch verläuft, und einer Umfangsfläche des kugelförmigen Kopfabschnitts (5) vorhanden ist, um relative Drehung des kugelförmigen Kopfabschnitts (5) zu dem Kugelkäfig (6) zu begrenzen,
wobei der Drehungs-Begrenzungsmechanismus (11) ein Eingriffsloch (12), das in der Umfangsfläche des kugelförmigen Kopfabschnitts (5) ausgebildet ist, und einen Begrenzungsbolzen (13) aufweist, der einen Eingriffsabschnitt (13a) mit kreisförmigem Querschnitt aufweist, der in das Eingriffsloch (12) in einem vorderen Ende eingeführt ist und an dem Kugelkäfig (6) von einer Außenseite des Kugelkäfigs (6) her befestigt ist,
das Eingriffsloch (12) einen Mittelpunkt hat, der an einem Umfang des virtuellen Kreises ausgebildet ist, und als ein ovales Loch ausgebildet ist, das eine Hauptachse, die in der Wellenachsenrichtung des Kugelbolzens (6) verläuft, sowie eine Nebenachse hat, die in einer Umfangsrichtung des virtuellen Kreises in dem Eingriffsloch (12) verläuft, und
die Nebenachse einem Durchmesser des Eingriffsvorsprungs (13a) gleich ist.

2. Kugelgelenk (10) nach Anspruch 1, wobei eine Vielzahl der Drehungs-Begrenzungsmechanismen (11) mit einem Abstand entlang einer Umfangsrichtung des virtuellen Kreises angeordnet sind.

3. Kugelgelenk (10) nach Anspruch 2, wobei ein Paar der Drehungs-Begrenzungsmechanismen (11) so angeordnet ist, dass diese einander mit einem dazwischen befindlichen Mittelpunkt des kugelförmigen Kopfabschnitts (5) zugewandt sind.

4. Kugelgelenk (10) nach Anspruch 2, wobei eine Vielzahl von Paaren der Drehungs-Begrenzungsmechanismen (11) so angeordnet ist , dass diese einander mit einem dazwischen befindlichen Mittelpunkt des kugelförmigen Kopfabschnitts (5) zugewandt sind.

## Revendications

1. Joint à rotule (10) comprenant :
une partie de tête sphérique (5) prévue dans l'extrémité avant d'un pivot à rotule (4) ;
un dispositif de maintien de rotule (6) contenant la partie de tête sphérique (5) dans un état de rotation relative ;
un support (7) qui supporte la partie de tête sphérique (5) dans le dispositif de maintien de rotule (6) et limite le déplacement relatif dans la direction de l'axe de l'arbre du pivot à rotule (6) **caractérisé par**
un mécanisme de limitation de rotation (11) prévu à un emplacement de cercle virtuel en tant qu'intersection entre un plan perpendiculaire à la direction de l'axe de l'arbre du pivot à rotule (6) et passant par le centre de la partie de tête sphérique (5) et la surface circonférentielle de la partie de tête sphérique (5) pour limiter la rotation relative de la partie de tête sphérique (5) contre le dispositif de maintien de rotule (6),
dans lequel le mécanisme de limitation de rotation (11) comporte un trou de mise en prise (12) formé dans la surface circonférentielle de la partie de tête sphérique (5) et un boulon de limitation (13) comportant une protubérance de mise en prise de section circulaire (13a) insérée dans le trou de mise en prise (12) dans l'extrémité avant et est fixé au dispositif de maintien de rotule (6) depuis le côté extérieur du dispositif de maintien de rotule (6),
le trou de mise en prise (12) possède un centre formé sur la circonférence du cercle virtuel et est constitué d'un trou ovale ayant un grand axe s'étendant dans la direction de l'axe de l'arbre du goujon de bille (6) et un petit axe s'étendant dans la direction circonférentielle du cercle virtuel dans le trou de mise en prise (12), et
le petit axe est égal au diamètre de la protubérance de mise en prise (13a).

2. Joint à rotule (10) selon la revendication 1, dans lequel une pluralité de mécanismes de limitation de rotation (11) sont munis d'un intervalle dans la direction circonférentielle du cercle virtuel.

3. Joint à rotule (10) selon la revendication 2, dans lequel les mécanismes d'une paire des mécanismes de limitation de rotation (11) sont agencés de manière à être tournés l'un vers l'autre par interposition du centre de la partie de tête sphérique (5).

4. Joint à rotule (10) selon la revendication 2, dans lequel les paires d'une pluralité de paires de mécanismes de limitation de rotation (11) sont agencées de manière à être tournées l'une vers l'autre par interposition du centre de la partie de tête sphérique (5).
